# EUROPEAN PATENT APPLICATION

(11) **EP 4 760 704 A1**
(43) Date of publication of application: **17.06.2026**
(21) Application number: 25222568.5
(22) Date of filing: 11.12.2025
(51) Int. Cl.: G09G 5/36

(54) **INFORMATION PROCESSING SYSTEM AND INFORMATION PROCESSING METHOD**

(30) Priority: 16.12.2024 JP 2024219654
(71) Applicant: Nintendo Co., Ltd., Kyoto-shi, Kyoto 601-8501 (JP)
(72) Inventor: SAKAI, Hitoshi, Kyoto-shi, Kyoto 601-8501 (JP); FUJITA, Akifumi, Kyoto-shi, Kyoto 601-8501 (JP); OOMORI, Toshiaki, Kyoto-shi, Kyoto 601-8501 (JP)
(74) Representative: Bardehle Pagenberg Partnerschaft mbB Patentanwälte Rechtsanwälte

(57) **Abstract**

In an example where a processing unit configured to generate image data performs processing in connection with a plurality of applications, there is room for improvement in how the processing unit is to be used. When a first processing unit performs first application processing and second application processing, a second processing unit performs processing for generating, based on the first application processing, second image data at a second resolution lower than a first resolution in a second time period within a unit time period, the second time period being shorter than a first time period, and performs processing for generating, based on the second application processing, third image data in a third time period within the unit time period, the third time period being different from the second time period. An output unit outputs an output image to a display, the output image including a second area where the second image data is shown and a third area where the third image data is shown, the second area being smaller than a first area and the third area being different from the second area.

## Description

The present disclosure relates to an information processing system and an information processing method.

### INTRODUCTION

An information processing system that performs image generation processing for generating an image by an application and processing different from the image generation processing has been known (for example, Japanese Patent Laying-Open No. 2018-010688).

### SUMMARY

In an example where a processing unit configured to generate image data performs processing in connection with a plurality of applications, there is room for improvement in how the processing unit is to be used.

(Configuration 1) An information processing system according to one embodiment includes a first processing unit configured to perform first application processing and second application processing, a second processing unit configured to generate one or more pieces of image data in each unit time period, and an output unit configured to output an output image based on the one or more pieces of image data to a display in each unit time period. When the first processing unit performs the first application processing and does not perform the second application processing, the second processing unit performs processing for generating, based on the first application processing, first image data at a first resolution in a first time period within the unit time period, and the output unit outputs to the display, the output image including a first area where the first image data is shown. When the first processing unit performs the first application processing and the second application processing, the second processing unit performs processing for generating, based on the first application processing, second image data at a second resolution in a second time period within the unit time period, the second resolution being lower than the first resolution and the second time period being shorter than the first time period, and performs processing for generating third image data based on the second application processing in a third time period within the unit time period, the third time period being different from the second time period, and the output unit outputs the output image to the display, the output image including a second area where the second image data is shown and a third area where the third image data is shown, the second area being smaller than the first area and the third area being different from the second area.

(Configuration 2) In Configuration 1, the second processing unit may perform predetermined processing different from processing for generating image data in a fourth time period within the unit time period, the fourth time period being different from the second time period and the third time period.

(Configuration 3) In Configuration 1 or 2, the information processing system may further include an acquisition unit configured to acquire image capture data resulting from image capture of a real space with a camera at least while a first condition is satisfied. The second processing unit is configured to perform predetermined processing on the image capture data when the first processing unit performs the first application processing and the second application processing and when the first condition and a second condition are satisfied. When the first condition is satisfied, a fourth time period is available regardless of whether the second condition is satisfied.

(Configuration 4) In any of Configurations 1 to 3, the second processing unit may generate the third image data based on the second application processing and based on at least a part of image capture data and a result of performing predetermined processing on the image capture data.

(Configuration 5) In any of Configurations 1 to 4, the information processing system may further include a communication unit configured to communicate with another information processing system. When the first processing unit performs the first application processing and the second application processing, the communication unit may acquire from the another information processing system, at least a part of image capture data resulting from image capture of a real space with a camera of the another information processing system and a result of performing predetermined processing on the image capture data. The second processing unit may generate the third image data based on the second application processing and based on at least the part of the image capture data and the result of performing the predetermined processing that are acquired from the another information processing system.

(Configuration 6) In any of Configurations 1 to 5, the second processing unit may generate image data selected in accordance with a user operation from the first image data and the second image data unless a first condition is satisfied even when the first processing unit performs the first application processing and the second application processing.

(Configuration 7) In any of Configurations 1 to 6, the second processing unit may include at least a first core for performing processing for generating image data and a second core for performing predetermined processing. A time period for switching may be provided between the processing for generating the image data and the predetermined processing.

(Configuration 8) In any of Configurations 1 to 7, when the second processing unit performs predetermined processing in a fourth time period, the second processing unit may generate image data at a third resolution lower than the second resolution, as the second image data based on the first application processing.

(Configuration 9) In any of Configurations 1 to 8, the information processing system may be supplied with electric power from an external power supply. When the first processing unit performs the first application processing and the second application processing, a resolution of the second image data generated when electric power from the external power supply is supplied to the information processing system may be higher than the resolution of the second image data generated when electric power from the external power supply is not supplied to the information processing system.

(Configuration 10) In any of Configurations 1 to 9, when the first processing unit performs the first application processing and the second application processing, the second processing unit may continue processing for generating the third image data in the third time period within a subsequent unit time period unless the second processing unit is able to complete generation of the third image data in the third time period within the unit time period.

(Configuration 11) In any of Configurations 1 to 10, when image data based on the first application processing includes at least a part of image capture data resulting from image capture of a real space with a camera, a part of a time period in which processing for generating image data based on the first application processing is performed may be used as a time period for performing predetermined processing on the image capture data.

(Configuration 12) According to one embodiment, an information processing method in an information processing system including a first processing unit configured to perform first application processing and second application processing and a second processing unit configured to generate one or more pieces of image data in each unit time period is provided. The information processing method includes, when the first processing unit performs the first application processing and does not perform the second application processing, performing, at the second processing unit, processing for generating, based on the first application processing, first image data at a first resolution in a first time period within the unit time period and outputting to a display, an output image including a first area where the first image data is shown in each unit time period. The information processing method includes, when the first processing unit performs the first application processing and the second application processing, performing, at the second processing unit, processing for generating, based on the first application processing, second image data at a second resolution in a second time period, the second resolution being lower than the first resolution and the second time period being shorter than the first time period, performing, at the second processing unit, processing for generating third image data based on the second application processing in a third time period within the unit time period, the third time period being different from the second time period, and outputting the output image to the display in each unit time period, the output image including a second area where the second image data is shown and a third area where the third image data is shown, the second area being smaller than the first area and the third area being different from the second area.

The foregoing and other objects, features, aspects, and advantages of the present disclosure will become more apparent from the following detailed description of the present disclosure when taken in conjunction with the accompanying drawings.

### BRIEF DESCRIPTION OF THE DRAWINGS

Fig. 1 shows an exemplary illustrative non-limiting drawing illustrating an exemplary configuration of an entire system including an information processing system according to the present embodiment.
Fig. 2 shows an exemplary illustrative non-limiting drawing illustrating an exemplary hardware configuration of a game device according to the present embodiment.
Figs. 3 to 5 show exemplary illustrative non-limiting drawings each illustrating an exemplary screen image at the game device according to the present embodiment.
Figs. 6A to 6D show exemplary illustrative non-limiting drawings each illustrating an exemplary mode of display of a camera image shown at the game device according to the present embodiment.
Fig. 7 shows an exemplary illustrative non-limiting drawing illustrating exemplary display processing in the game device according to the present embodiment.
Figs. 8A to 8C show exemplary illustrative non-limiting drawings each illustrating exemplary scheduling of a GPU in the game device according to the present embodiment.
Fig. 9 shows an exemplary illustrative non-limiting drawing illustrating an exemplary flowchart showing exemplary processing in connection with a scheduler in the game device according to the present embodiment.

### DETAILED DESCRIPTION

The present embodiment will be described in detail with reference to the drawings. The same or corresponding elements in the drawings have the same reference characters allotted and description thereof will not be repeated.

### [A. Exemplary Operation]

An exemplary operation of an information processing system according to the present embodiment will initially be described.

A game device 100, as an example of the information processing system will be described. The information processing system may be, for example, a personal computer, a smartphone, a tablet, a smart television, or the like.

The term "information processing system" encompasses at least both of a configuration in which necessary components are housed in a single housing and a configuration in which necessary components are housed in a plurality of housings in a divided manner.

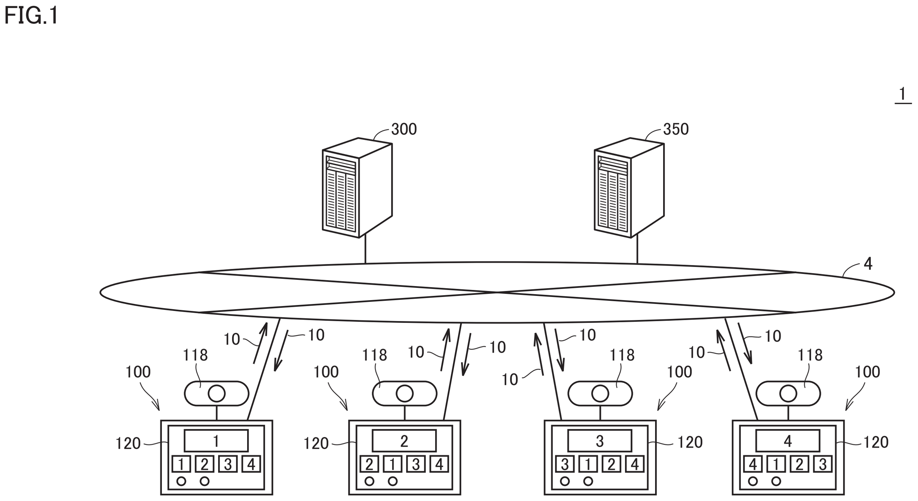

Referring to Fig. 1, an entire system 1 includes one or more game devices 100. Fig. 1 shows entire system 1 including four game devices 100 by way of example. Entire system 1 may further include a relay server 300 and a management server 350.

In entire system 1, users who use game devices 100 can communicate with one another over a network 4. More specifically, each of game devices 100 can exchange communication data 10 for communication with one or more other game devices 100. In other words, game device 100 can transmit communication data 10 generated thereby to one or more other game devices 100 and can receive communication data 10 from one or more other game devices 100. Game device 100 may perform processing (for example, image display on a display 120, sound output, and the like) based on communication data 10 acquired from one or more other game devices 100.

In the description below, game device 100 that transmits communication data 10 will also be referred to as a "source." Each of game devices 100 can be the source and can also receive communication data 10 from another source. A certain game device 100 can also receive communication data 10 from each of a plurality of other game devices 100. Therefore, from a point of view of certain game device 100, there are a plurality of sources. There may be game device 100 that exclusively receives communication data 10, or there may be game device 100 that exclusively transmits communication data 10.

Communication data 10 to be exchanged between game devices 100 may include at least one of image data or sound data. Communication data 10 may include mask information, attribute information, or the like as will be described later.

The image data may include, for example, at least one of image data based on a game application running in game device 100 or camera image data generated from image capture data captured by a camera 118 available to game device 100. The image data may be at least one of motion picture data or one or more pieces of still picture data.

Sound data may include at least one of sound data based on a game application running in game device 100 or sound data collected by a microphone available to game device 100.

The image data and the sound data may be transmitted together or separately. Communication data 10 may be transmitted as stream data.

A scheme and a function as a whole for communication between users who use game devices 100 as described above will also be referred to as a "chat" below. Such a chat is supposed to be performed based on participation by a plurality of users. One or more users (or accounts) that join the same chat may collectively also be referred to as a "chat group." Participation in the chat group may be managed for each account associated with each user.

Though communication data 10 is exchanged between game devices 100, participation in the chat group may be on a user basis or an account basis. One or more accounts may be registered in a single game device 100. In this case, the user who uses game device 100 may select the account each time. Alternatively, the user who uses game device 100 may operate game device 100 to access management server 350 or the like and perform processing such as log-in, so that the account is dynamically associated with that game device 100.

A method of exchange of communication data 10 between game devices 100 may be a method via one or more relay entities (for example, relay servers 300) or a method (for example, P2P) of directly transmitting communication data between game devices 100.

Relay server 300 relays communication data 10 transmitted by game device 100. More specifically, when relay server 300 receives communication data 10 from certain game device 100, it transfers received communication data 10 to one or more other game devices 100.

Management server 350 is responsible for management necessary for exchange of communication data 10 by one or more game devices 100. For example, management server 350 may generate a session for a new chat or determine whether or not to permit game device 100 or the user to join the new chat.

Relay server 300 and management server 350 may be implemented by a single physical server. Entire system 1 may include a plurality of relay servers 300 or may include a plurality of management servers 350. Relay server 300 and management server 350 do not have to be separate in function. Relay server 300 and management server 350 may each be a virtual server.

### [B. Exemplary Hardware Configuration of Game Device 100]

An exemplary hardware configuration of game device 100 according to the present embodiment will now be described. Game device 100 is a kind of computer.

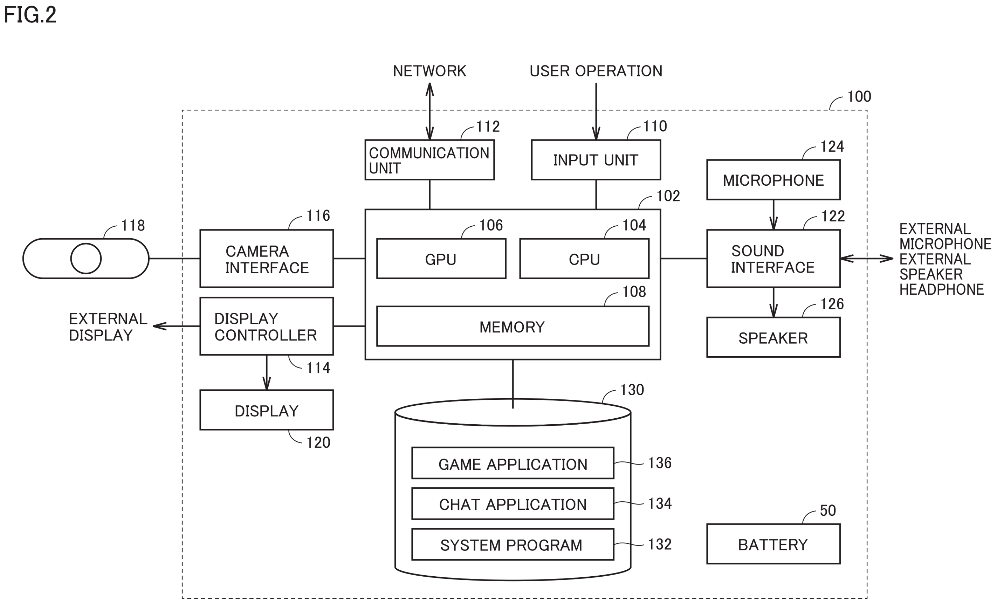

Referring to Fig. 2, game device 100 includes, for example, control circuitry 102, an input unit 110, a communication unit 112, a display controller 114, a camera interface 116, display 120, a sound interface 122, a microphone 124, a speaker 126, a storage 130, and a battery 50.

Control circuitry 102 is responsible for processing to be performed in game device 100. Control circuitry 102 includes, for example, a central processing unit (CPU) 104, a graphics processing unit (GPU) 106, and a memory 108. Control circuitry 102 may be a system on chip (SoC). CPU 104, GPU 106, and memory 108 may be implemented independently of one another, rather than being implemented by single control circuitry 102.

Control circuitry 102 may include a plurality of CPUs 104 and may include a plurality of GPUs 106. CPU 104 may include a plurality of cores. GPU 106 may include a plurality of cores. Control circuitry 102 may include a plurality of memories 108. Memory 108 may include an area accessible from both of CPU 104 and GPU 106 and may include an area accessible from only one of CPU 104 or GPU 106. Memory 108 is, for example, a volatile storage medium such as a dynamic random-access memory (DRAM) or a static random access memory (SRAM).

Input unit 110 accepts a user operation. Input unit 110 includes, for example, a keyboard, a mouse, a game controller, a button, a cross-shaped key, and/or the like. Input unit 110 may be an interface with an apparatus (for example, a game controller) that accepts a user operation. In other words, the apparatus that accepts the user operation may be located outside game device 100.

Communication unit 112 exchanges data with another game device 100, relay server 300, management server 350, or the like over network 4. Communication unit 112 may be connected to network 4 through a wire or wirelessly.

Display controller 114 generates at least one of a video signal for showing an image on display 120 or a video signal for showing an image on an external display, based on image data generated by control circuitry 102.

Display 120 is, for example, a liquid crystal display (LCD), an organic EL display, or the like.

A part or the entirety of display controller 114 may be included in control circuitry 102.

Camera interface 116 receives image capture data from camera 118. Connection of camera interface 116 to camera 118 may be wired connection or wireless connection.

Camera 118 generates image capture data (motion picture data or still picture data) resulting from image capture of a real space in accordance with a command from game device 100 or in accordance with a predetermined condition. Camera 118 includes an image capture element such as a charge-coupled device (CCD) image sensor or a complementary metal oxide semiconductor (CMOS) image sensor. A lens may be arranged in a stage preceding the image capture element.

Camera 118 may be, for example, a camera for video chat. Camera 118 may be a dedicated camera connectable only to a specific device or a general-purpose camera connectable to any device. A plurality of cameras 118 may be connectable to game device 100. Camera 118 may be incorporated in game device 100. In other words, game device 100 may include one or more cameras.

For communication unit 112 and camera interface 116, for example, universal serial bus (USB) connection, parallel connection, or the like may be employed as wired connection. For example, Bluetooth^{®}, ZigBee^{®}, wireless LAN (IEEE 802.11), or the like may be employed as wireless connection.

Sound interface 122 exchanges a sound signal with a connected device. Sound interface 122 may include a phone jack. By way of example, sound interface 122 acquires a sound signal based on a sound collected by microphone 124. Sound interface 122 outputs to speaker 126, a sound signal based on sound data generated by control circuitry 102.

Microphone 124 is arranged at a housing or the like of game device 100 and collects sound to generate a sound signal. Speaker 126 is arranged at the housing or the like of game device 100 and generates sound from a sound signal. At least one of microphone 124 and speaker 126 may be located outside game device 100. For example, a headphone or a headset may be connected to the phone jack of sound interface 122.

Storage 130 is a non-volatile storage medium such as a flash memory and a hard disk. For example, a system program 132, a chat application 134, and one or more game applications 136 are stored in storage 130.

System program 132 includes computer readable instructions for basic processing such as hardware control of game device 100 and provision of a program execution environment. System program 132 may be an operating system (OS).

Chat application 134 includes computer readable instructions necessary for realizing the chat described above. A part or the entirety of chat application 134 may be included in system program 132.

Game application 136 includes computer readable instructions for execution of a game.

Storage 130 may include, for example, a storage medium attachable to and removable from game device 100, such as a cartridge and an optical disc. In this case, game device 100 may include an interface for connection to an attachable and removable storage medium.

The term "processor" herein encompasses at least CPU 104 and GPU 106 and hard-wired circuitry such as an application specific integrated circuit (ASIC) or a field programmable gate array (FPGA).

The term "memory" herein encompasses at least memory 108 and storage 130.

Battery 50 supplies electric power to each component of game device 100. A circuit for charging and discharging and a circuit for supply of electric power (neither of which is shown) are electrically connected to battery 50.

### [C. Exemplary Screen Image]

An exemplary screen image shown at game device 100 will now be described.

Game device 100 may provide a kind of voice chat function by executing chat application 134. The voice chat is realized, for example, by exchange of sound data between game devices 100.

In addition, game device 100 may provide a kind of image streaming function by executing chat application 134. Image streaming is realized, for example, by exchange of image data between game devices 100. Image streaming can also be referred to as a kind of video chat. In image streaming, image data for showing at least a part of a screen image shown on display 120 of source game device 100 may be transmitted to another game device 100.

Furthermore, in image streaming, camera image data generated from image capture data captured by camera 118 available to source game device 100 may be transmitted to another game device 100. The user who operates game device 100 may turn on/off the function to transmit the camera image data.

The function of transmission by game device 100, of the camera image data to another game device 100 will also be referred to as "use of the camera image" below. "Use of the camera image is on" means a state in which at least processing of image capture data captured by camera 118 of game device 100 has been activated. When a condition that use of the camera image is on is satisfied, control circuitry 102 or camera interface 116 acquires the image capture data resulting from image capture of the real space with camera 118. Processing for showing the camera image data acquired from another game device 100 may be activated only when use of the camera image is on.

In the description below, "the voice chat is on" means a state in which at least one of a function to transmit sound data to another user who has joined the chat group or a function to receive sound data from another user who has joined the chat group has been activated.

In the description below, "video streaming is off" means at least one of a state in which no user who has joined the chat group is streaming video or a state in which game device 100 has been set not to show video delivered from another user. "Video streaming is on" means at least one of a state in which the user who uses game device 100 is streaming video or a state in which game device 100 has been set to show video delivered from another user.

In addition to the voice chat or video streaming, a text chat may be available. In performing the text chat, communication data 10 may include information on text transmitted by each game device 100. An image showing such text may be shown.

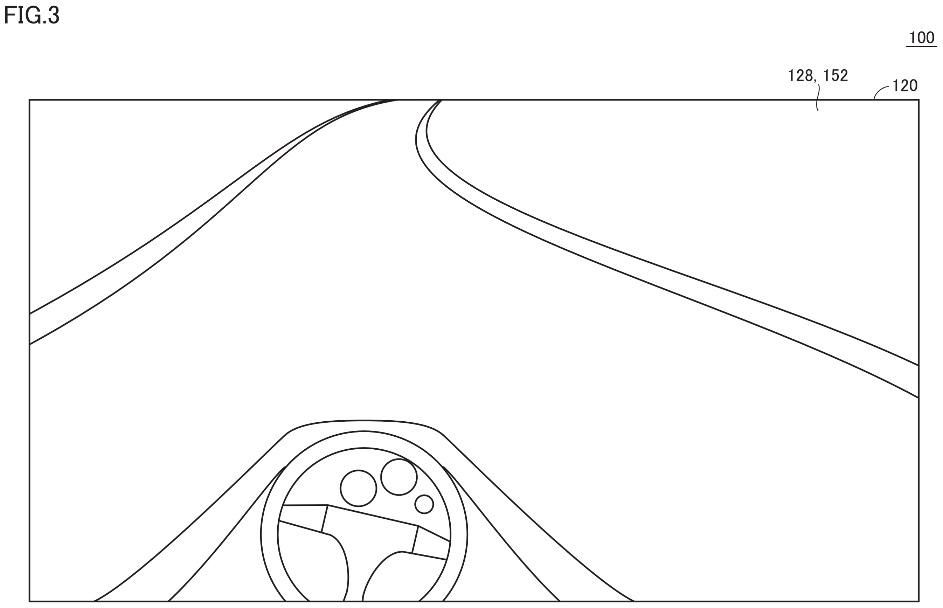

Fig. 3 shows an exemplary screen image 128 while game application 136 is running. In Fig. 3, chat application 134 is not running. Therefore, both of the voice chat and video streaming are off.

In the state shown in Fig. 3, screen image 128 shown on display 120 of game device 100 includes a game image 152 based on game application 136. Game image 152 covers the entire display area of display 120. In this example, screen image 128 is the same as game image 152. Game device 100 generates game image data (game image data 152D which will be described later) corresponding to the entire display area of display 120.

The user who uses game device 100 plays a game while watching game image 152 as screen image 128.

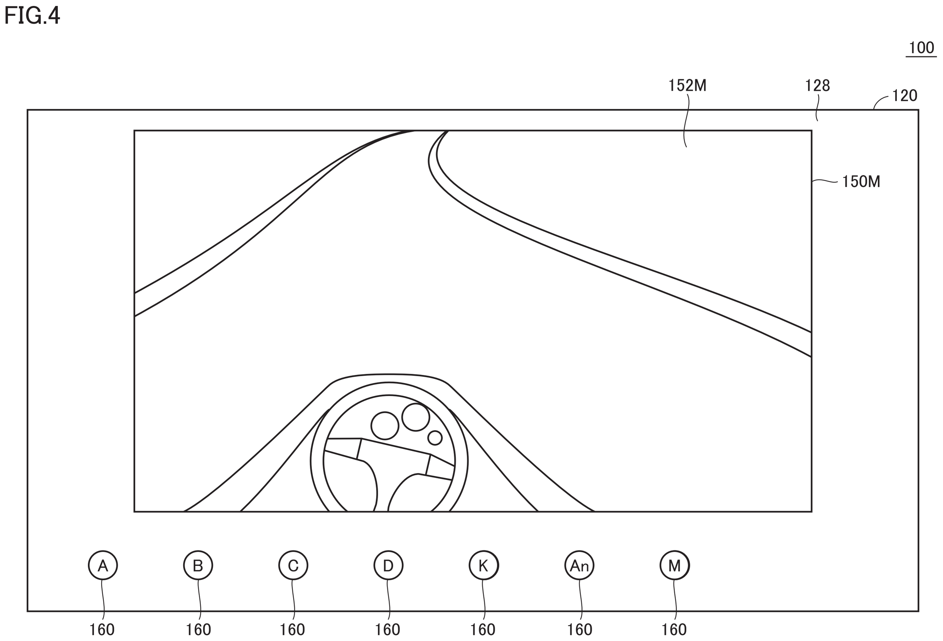

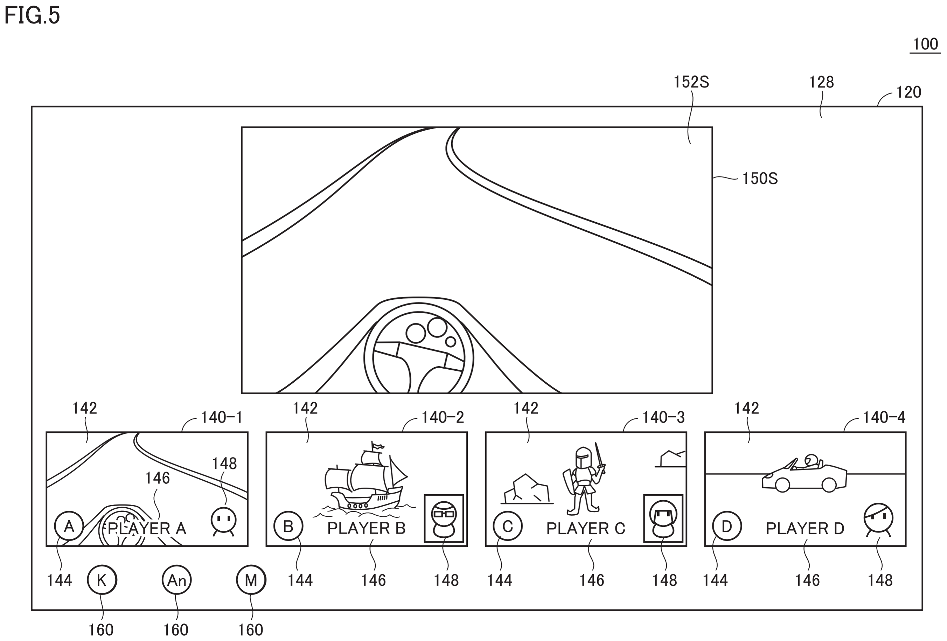

Figs. 4 and 5 each show an exemplary screen image while chat application 134 is running. In Figs. 4 and 5, also game application 136 in addition to chat application 134 is assumed to be running.

Fig. 4 shows an exemplary screen image when the voice chat is on and video streaming is off. Screen image 128 shown on display 120 of game device 100 includes a main image 150M and an icon image 160.

A game image 152M based on game application 136 is shown as main image 150M. Main image 150M may occupy, for example, an area approximately 4/5 the entire display area of display 120.

Icon image 160 shows an account that has joined the chat group. A manner of display of icon image 160 may vary in response to utterance of a corresponding user. For example, icon image 160 of a user who is uttering may vary in display size in response to utterance, or a color of display or brightness may vary in response to utterance.

A user who uses game device 100 can play a game and enjoy conversation or the like with a user who has joined the chat group while the user is watching game image 152M. Game application 136 may be an application for performing a player-versus-player (PVP) game that one or more other users can also join. The user who can join or has joined the PVP game does not have to be the same as the user who has joined the chat group.

Fig. 5 shows an exemplary screen image when the voice chat and video streaming are on and furthermore use of the camera image is also on. In this case, communication data 10 includes image data and camera image data that show at least a part of the screen image. The user who uses game device 100 can share the screen image of the game that the user himself/herself is playing with another user.

Referring to Fig. 5, screen image 128 shown on display 120 of game device 100 includes a main image 150S, streaming display images 140-1 to 140-4 (which may also collectively be referred to as a "streaming display image 140" below), and icon image 160.

A game image 152S based on game application 136 is shown as main image 150S. Main image 150S may occupy, for example, an area approximately 2/3 the entire display area of display 120.

Streaming display images 140-2 to 140-4 are generated based on communication data 10 received from other game devices 100 associated with other accounts that have joined the chat group. Streaming display image 140-1 may be generated based on communication data 10 transmitted by game device 100 to other game devices 100 associated with other accounts that have joined the chat group. In other words, streaming display image 140-1 may be an image for monitoring communication data 10 transmitted by game device 100.

Streaming display image 140-1 may also be generated based on communication data 10 received from another game device 100 associated with another account that has joined the chat group.

Each of streaming display images 140-1 to 140-4 includes a game image 142, a user icon 144, a user name 146, and a camera image 148.

Game image 142 corresponds to game image 152 based on game application 136 running in source game device 100. Game image 142 is not limited to game image 152 based on game application 136 running in source game device 100, and may be any image generated at source game device 100.

User icon 144 indicates the account selected at source game device 100. User icon 144 may be set or generated in advance at source game device 100. User name 146 indicates information on the user corresponding to the account of source game device 100.

Camera image 148 is based on image capture data of camera 118 available to source game device 100. At source game device 100, the user may be allowed to select whether or not to permit transmission of the camera image. Management server 350 may manage whether or not to permit transmission of the camera image for each game device 100 or for each account.

At least one of user icon 144 or user name 146 does not have to be shown. In addition, at least one of game image 142 or camera image 148 may not be shown. In addition to these images or instead of any image, another image may be shown.

As screen image 128 shown in Fig. 4 is shown on display 120, the user himself/herself of game device 100 also can play a game while he/she is watching game statuses (or game images 142) of another user.

As shown in Figs. 4 and 5, when a user plays a game while the user is communicating with another user, game application 136 and chat application 134 are running in parallel at game device 100.

Game image 152M shown in Fig. 4 and game image 152S shown in Fig. 5 are images based on game application 136, similarly to game image 152 shown in Fig. 3. Game image 152M, however, is lower in resolution than game image 152 shown in Fig. 3. Game image 152S is lower in resolution than game image 152M. In order to clarify such a difference in resolution, suffixes "M" and "S" are provided. Therefore, in a context in which attention is not paid to the resolution, the game images will also collectively be referred to as a "game image 152."

The "resolution" herein mainly means a screen resolution or the number of pixels. The "resolution" may be expressed in a form of multiplication of the numbers of pixels at two sides (for example, 1920 pixels × 1080 pixels) or may be expressed in a form of the total number of pixels of an image (for example, 2,073,600 pixels).

A size of areas occupied by main images 150M and 150S and streaming display image 140 may be variable.

### [D. Exemplary Mode of Display of Camera Image]

An exemplary mode of display of camera image 148 included in streaming display image 140 will now be described.

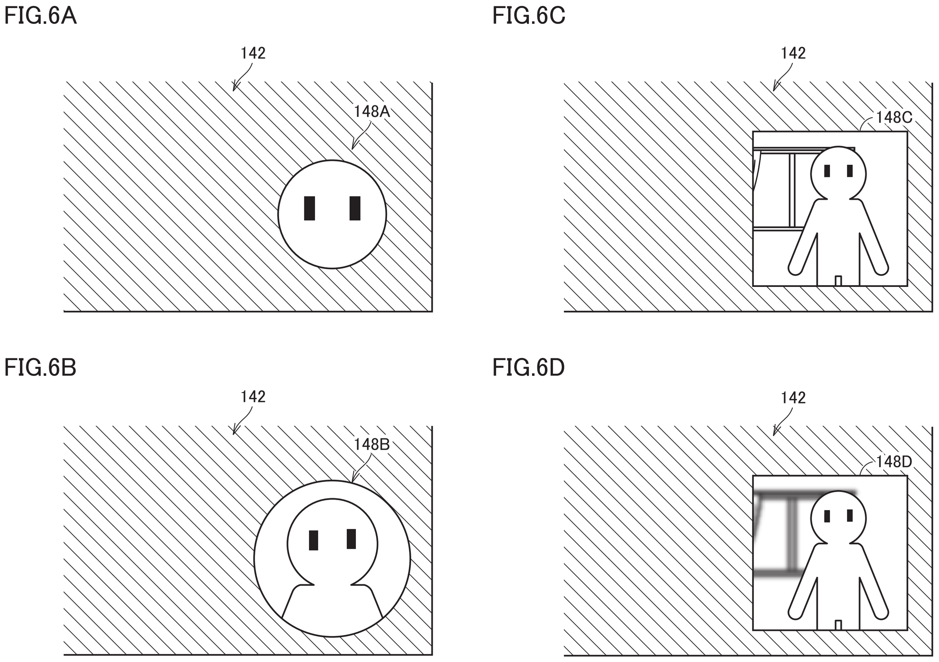

As shown in Figs. 6A to 6D, in streaming display image 140, camera image 148 may be shown as being superimposed on game image 142. In Figs. 6A to 6D, in order to clarify the manner of display of camera image 148, an area where game image 142 is shown is shown with hatching.

Fig. 6A shows an exemplary camera image 148A in a face display mode. In the face display mode, an image obtained by cutting the face of a person in the image shown based on the image capture data of camera 118 is shown. Source game device 100 detects an area of the face of the person in the image capture data of camera 118, extracts the contour of the detected face of the person, and generates mask information indicating the extracted contour.

Fig. 6B shows an exemplary camera image 148B in a person display mode. In the person display mode, an image obtained by cutting an area of a person in the image shown based on the image capture data of camera 118 is shown. Source game device 100 extracts the contour of the person in the image capture data of camera 118 and generates mask information indicating the extracted contour.

Though Fig. 6B shows exemplary representation where the background of the person is set to white, any image may be set as the background. In this case, image processing such as superimposition of the image of the person on the background image may be performed.

Fig. 6C shows an exemplary camera image 148C in an unprocessed mode. In the unprocessed mode, an image shown based on the image capture data of camera 118 is shown as it is. Game device 100 transmits to another game device 100, the image capture data of camera 118 as it is, as the camera image data corresponding to camera image 148C.

Fig. 6D shows an exemplary camera image 148D in a background blurred mode. In the background blurred mode, an image where an area other than the person is blurred away in the image capture data of camera 118 is shown. Source game device 100 specifies the area of the person in the image shown based on the image capture data of camera 118 and blurs away an area other than the specified area of the person.

Source game device 100 generates the camera image data in accordance with the display mode as described above. The camera image data includes at least a part of the image capture data resulting from image capture of the real space with camera 118.

The mode of display of camera image 148 as described above may be set by source game device 100 or by game device 100 that receives the camera image data.

### [E. Exemplary Display Processing in Game Device 100]

Exemplary display processing in game device 100 will now be described.

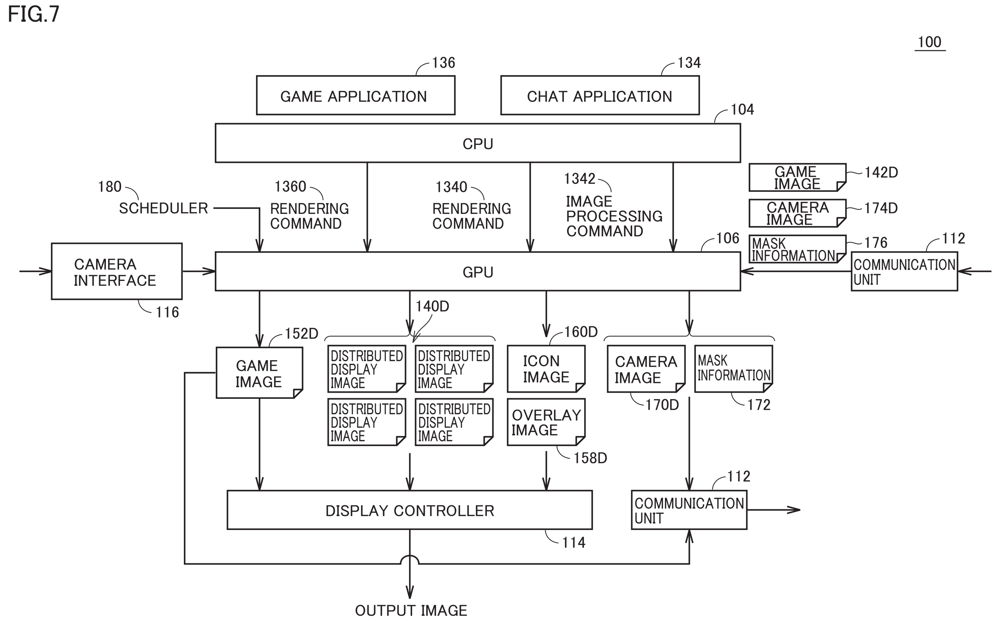

Referring to Fig. 7, CPU 104 can execute game application 136 and chat application 134. CPU 104 performs processing of game application 136 in accordance with computer readable instructions included in game application 136. CPU 104 performs processing of chat application 134 in accordance with computer readable instructions included in chat application 134.

CPU 104 issues a rendering command 1360 to GPU 106 by executing game application 136. Rendering command 1360 includes, for example, a command for rendering game image data 152D in accordance with progress of the game by game application 136. For example, rendering command 1360 may periodically be issued in accordance with a frame rate of display 120. Rendering command 1360 may include designation of the resolution of game image 152. GPU 106 generates game image data 152D in accordance with rendering command 1360.

CPU 104 issues a rendering command 1340 to GPU 106 by executing chat application 134. Rendering command 1340 includes a command for generating an image based on chat application 134. Rendering command 1340 includes, for example, a command for rendering streaming display image data 140D. GPU 106 generates streaming display image data 140D by using game image data 142D, camera image data 174D, mask information 176, and the like included in communication data 10 acquired by communication unit 112, in accordance with rendering command 1340.

In an example where streaming display image 140-1 shown in Fig. 5 described above is based on communication data 10 transmitted to another game device 100, GPU 106 generates streaming display image data 140D corresponding to streaming display image 140-1 based on at least a part of the image capture data of camera 118 and the mask information generated from the image capture data.

Streaming display images 140-2 to 140-4 shown in Fig. 5 described above, on the other hand, are based on communication data 10 acquired from other game devices 100. Therefore, GPU 106 generates streaming display image data 140D corresponding to streaming display images 140-2 to 140-4 based on camera image data 174D and mask information 176 acquired from other game devices 100. Game device 100 does not have to perform processing or the like for generating the mask information for other game devices 100 by acquiring camera image data 174D and mask information 176 from other game devices 100. In other words, though predetermined processing on the image capture data is relatively high in load, a result obtained as each game device 100 performs the predetermined processing on the image capture data captured by camera 118 available to itself is transmitted to other game devices 100 and hence the predetermined processing is not performed in a duplicated manner.

As source game device 100 transmits camera image data 174D and mask information 176 to other game devices 100, other game devices 100 can perform, for example, such processing as setting any image as the background for the area other than the face of the person or the area other than the person. Alternatively, the area other than the face of the person or the area other than the person may be made transparent.

When use of the camera image is on while chat application 134 is running, CPU 104 may issue an image processing command 1342 to GPU 106. Image processing command 1342 includes, for example, a command for generating camera image data 170D based on the image capture data of camera 118.

The command included in image processing command 1342 is changed depending on the modes shown in Figs. 6A to 6D. For example, when the face display mode shown in Fig. 6A or the person display mode shown in Fig. 6B is selected, image processing command 1342 includes a command for generating mask information 172 indicating the area of the face of the person or the area of the person. Image processing command 1342 may designate, for example, processing using deep learning. More specifically, image processing command 1342 may include a command for detecting the area of the face of the person from the image capture data of camera 118 by deep learning.

GPU 106 may include circuitry available as general-purpose computing on graphics processing units (GPGPU) for deep learning or the like. For example, GPU 106 may include a cluster including a core for performing processing (for example, rendering or the like) in accordance with rendering command 1340 and a core for performing processing (for example, processing or the like using deep learning) in accordance with image processing command 1342. For example, when only a single core can be activated at each time point in the cluster, the core is switched after rendering command 1340 is issued.

GPU 106 generates camera image data 170D, or camera image data 170D and mask information 172, based on the image capture data of camera 118 acquired via camera interface 116, in accordance with image processing command 1342.

Rendering command 1340 or rendering command 1360 issued by CPU 104 may include a command for generating icon image data 160D and overlay image data 158D. For example, icon image data 160D shows icon image 160 shown in Fig. 4 or 5. Overlay image data 158D includes an icon image or an image showing a message that is shown as being overlaid on display 120. GPU 106 may generate at least one of icon image data 160D and overlay image data 158D, in accordance with rendering command 1340 or rendering command 1360.

GPU 106 periodically generates one or more pieces of image data (for example, game image data 152D, streaming display image data 140D, icon image data 160D, and overlay image data 158D) in each unit time period.

Display controller 114 outputs to display 120, an output image based on the one or more pieces of image data (for example, game image data 152D, streaming display image data 140D, icon image data 160D, and overlay image data 158D) in each unit time period. At least a part of processing for which display controller 114 is responsible may be performed by GPU 106.

For example, when the frame rate is set to 60 frames per second [fps], the unit time period may be set to 1/60 [sec] corresponding to a time period of one frame. The unit time period may be changed in accordance with a state of game device 100 or an application to be executed. The frame rate may vary in accordance with a refresh rate of display 120.

Communication unit 112 transmits communication data 10 including the game image, camera image data 170D, mask information 172, or the like. Game image 152 included in communication data 10 may be lower in resolution than game image data 152D generated by GPU 106.

GPU 106 may generate each of game image data 142D, user icon 144, user name 146, and camera image 148 rather than directly generating streaming display image data 140D, and display controller 114 may layer these images to generate streaming display image 140 or the output image.

"Image data" shown in Fig. 7 can also be paraphrased as "rendering data." The image data may temporarily be stored in any interim buffer. The interim buffer may be provided, for example, in any area of memory 108 or in a part of display controller 114.

GPU 106 processes a plurality of commands issued by CPU 104. A scheduler 180 manages time available for processing each command at GPU 106. Scheduler 180 may be, for example, a part of the function provided by system program 132. Scheduler 180 may manage performance at GPU 106 on a process basis or a thread basis. Exemplary management of computing resources of GPU 106 will be described below.

### [F. Exemplary Management of Computing Resources at Game Device 100]

Exemplary management of the computing resources at game device 100 will now be described.

As shown in Fig. 3, when game application 136 is running but chat application 134 is not running, GPU 106 of game device 100 should only mainly perform processing for generating game image data 152D. In other words, GPU 106 performs processing for generating game image data 152D based on game application 136 in each unit time period. The resolution of game image data 152D matches, for example, with the resolution of the entire display area of display 120. Display controller 114 outputs to display 120, the output image including game image 152 showing game image data 152D.

As shown in Fig. 4, when the voice chat is on while game application 136 and chat application 134 are running, icon image 160 in addition to main image 150M is shown on display 120. GPU 106 performs processing for generating game image data 152D based on game application 136 and performs processing for generating icon image data 160D for showing icon image 160, in each unit time period.

Main image 150M shown in Fig. 4 is smaller than the entire display area of display 120. Therefore, game image data 152D is lower in resolution than game image data 152D for showing game image 152. Display controller 114 outputs to display 120, the output image including game image 152M showing game image data 152D and icon image 160 showing icon image data 160D.

As shown in Fig. 5, when the voice chat and image streaming are on while game application 136 and chat application 134 are running, streaming display image 140 and icon image 160 in addition to main image 150S are shown on display 120. GPU 106 performs processing for generating game image data 152D based on game application 136 and processing for generating streaming display image data 140D for showing streaming display image 140 and icon image data 160D for showing icon image 160, in each unit time period.

Furthermore, when use of the camera image is on, game device 100 generates camera image data 170D (depending on the mode, camera image data 170D and mask information 172). GPU 106 performs processing for generating camera image data 170D (or camera image data 170D and mask information 172) in each unit time period. A cycle of generation of camera image data 170D (or camera image data 170D and mask information 172) may be different from the cycle of generation of the image data.

Main image 150S shown in Fig. 5 is smaller than the entire display area of display 120. Therefore, game image data 152D is lower in resolution than game image data 152D for showing game image 152. Display controller 114 outputs to display 120, the output image including game image 152S showing game image data 152D, streaming display image 140 showing streaming display image data 140D, and icon image 160 showing icon image data 160D.

The resolution of game image 152M shown in Fig. 4 and the resolution of game image 152S shown in Fig. 5 are lower than the resolution of game image 152 shown in Fig. 3. In other words, loads in processing for generating game image data 152D in the state in Fig. 4 or 5 are expected to be lower than loads in processing for generating game image data 152D in the state in Fig. 3. In other words, computing resources necessary for showing game image 152M or 152S can be less than computing resources necessary for showing game image 152.

In game device 100, allocation of the computing resources provided by GPU 106 may be changed in accordance with whether or not chat application 134 is running.

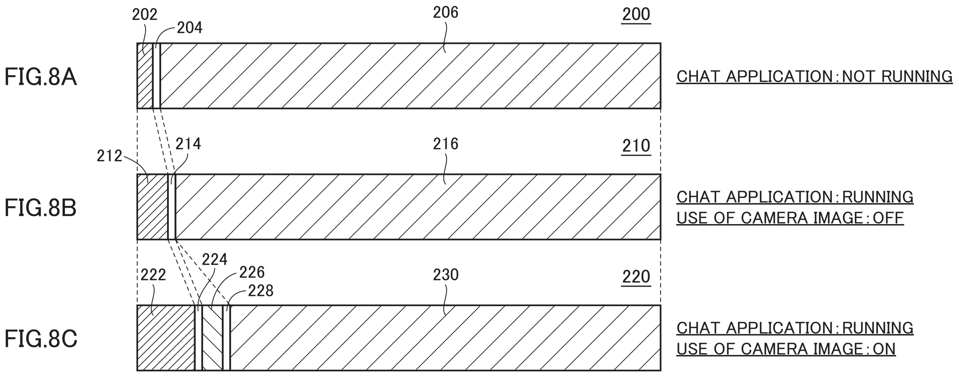

Exemplary scheduling of GPU 106 at game device 100 according to the present embodiment will be described with reference to Fig. 8. A GPU schedule shown in Fig. 8 may be set by scheduler 180 for GPU 106.

For example, when rendering processing is performed in accordance with rendering command 1340 issued with execution of chat application 134 and thereafter rendering processing is performed in accordance with rendering command 1360 issued with execution of game application 136, context switching occurs between the processing and the processing. A context switching time period shown in Fig. 8 represents a time period in which such context switching occurs.

A GPU schedule 200 shown in Fig. 8A corresponds to a state in which game application 136 is running and chat application 134 is not running (see, for example, Fig. 3).

GPU schedule 200 includes a first resource allocation period 202, a context switching period 204, and a second resource allocation period 206.

For example, a temporal length of first resource allocation period 202 may be 5% of a unit time period and a temporal length of second resource allocation period 206 may be 93% of the unit time period. Context switching period 204 which is a time period required for switching performance of a process between first resource allocation period 202 and second resource allocation period 206 may be 2% of the unit time period.

In first resource allocation period 202, GPU 106 performs processing for generating overlay image data 158D as necessary.

In second resource allocation period 206, GPU 106 performs processing for generating game image data 152D that corresponds to game image 152 and is based on game application 136. For example, in second resource allocation period 206, game image data 152D at the resolution corresponding to the entire display area of display 120 is generated.

A GPU schedule 210 shown in Fig. 8B corresponds to a state in which image streaming is off while game application 136 and chat application 134 are running (see, for example, Fig. 4). Since image streaming is off, use of the camera image is also off.

GPU schedule 210 includes a first resource allocation period 212, a context switching period 214, and a second resource allocation period 216.

For example, the temporal length of first resource allocation period 212 may be 10% of the unit time period and the temporal length of second resource allocation period 216 may be 88% of the unit time period. Context switching period 214 may be 2% of the unit time period.

In first resource allocation period 212, GPU 106 performs processing for generating icon image data 160D corresponding to icon image 160. GPU 106 may perform processing for generating overlay image data 158D as necessary.

In second resource allocation period 216, GPU 106 performs processing for generating game image data 152D that corresponds to game image 152M or game image 152S and is based on game application 136. Second resource allocation period 216 is shorter than second resource allocation period 206 shown in Fig. 8A.

A GPU schedule 220 shown in Fig. 8C corresponds to a state in which video streaming and use of the camera image are on while game application 136 and chat application 134 are running (see, for example, Fig. 5).

GPU schedule 220 includes a first resource allocation period 222, a first context switching period 224, a third resource allocation period 226, a second context switching period 228, and a second resource allocation period 230.

For example, the temporal length of first resource allocation period 222 may be 10% of the unit time period, the temporal length of third resource allocation period 226 may be 10% of the unit time period, and the temporal length of second resource allocation period 230 may be 76% of the unit time period. Each of first context switching period 224 and second context switching period 228 may be 2% of the unit time period.

In first resource allocation period 222, GPU 106 performs processing for generating streaming display image data 140D corresponding to streaming display image 140 and performs processing for generating icon image data 160D corresponding to icon image 160. GPU 106 may generate overlay image data 158D as necessary. For example, since streaming display image data 140D should be generated, first resource allocation period 222 is longer than first resource allocation period 212 shown in Fig. 8B.

In third resource allocation period 226, GPU 106 performs predetermined processing different from processing for generating image data (or rendering). For example, GPU 106 generates camera image data 170D, or camera image data 170D and mask information 172, based on the image capture data of camera 118. More specifically, GPU 106 performs processing for detecting the face area of the person, detecting the person, extracting the contour of the detected face, generating mask information 172 indicating the extracted contour, or the like, on the image capture data. For example, mask information 172 is generated as the result of performing the predetermined processing on the image capture data. The computing resources of GPU 106 may thus be allocated such that GPU 106 is available as the GPGPU.

First context switching period 224 is a time period for switching that is provided between the processing for generating the image data and the predetermined processing.

In second resource allocation period 230, GPU 106 performs processing for generating game image data 152D that corresponds to game image 152S and is based on game application 136. For example, since game image 152S shown in Fig. 5 is lower in resolution than game image 152M shown in Fig. 4, second resource allocation period 230 is set to be shorter than second resource allocation period 216 shown in Fig. 8B.

When use of the camera image is on, the predetermined processing is performed on the image capture data of camera 118, and hence the computing resources should be allocated to the predetermined processing. The area occupied by game image 152S in display 120, on the other hand, is relatively small. Therefore, by decreasing the computing resources to be allocated to generation of game image data 152D corresponding to game image 152S, necessary processing can be performed within a range of the computing resources of GPU 106.

Thus, when GPU 106 performs the predetermined processing in third resource allocation period 226, it performs processing for generating game image data 152D further lower in resolution, as the game image data based on game application 136.

Selection from among some modes of display (see Figs. 6A to 6D) of camera image 148 may be allowed. In the face display mode (see Fig. 6A) or the person display mode (see Fig. 6B) among the display modes described above, processing for generating mask information 172 is performed. In the unprocessed mode (see Fig. 6C) or the background blurred mode (see Fig. 6), on the other hand, processing for generating mask information 172 does not have to be performed.

Therefore, the predetermined processing described above is performed when a condition that use of the camera image is on and a condition that a specific mode of display of camera image 148 has been selected are satisfied. Therefore, a necessary amount of computing resources of GPU 106 may vary depending on the mode of display of camera image 148.

The same GPU schedule, however, may be applied regardless of the mode of display of camera image 148. Specifically, when the condition that use of the camera image is on is satisfied, third resource allocation period 226 may be maintained available, regardless of whether or not the condition that the specific mode of display of camera image 148 has been selected is satisfied.

The GPU schedule described above indicates allocation of the computing resources, and it is not necessarily the case that processing is performed throughout the allocated time period. In other words, a part of the allocated time period may be an idle period.

The GPU schedule described above is by way of example, and the length of the allocated time period may be changed as appropriate. A modification or the like of the GPU schedule will be described below.

In one embodiment, when video streaming is on but use of the camera image is off while game application 136 and chat application 134 are running, either GPU schedule 210 or GPU schedule 220 may be selected. Alternatively, another GPU schedule in accordance with a case in which video streaming is on but use of the camera image is off may be prepared.

In one embodiment, when video streaming is on but use of the camera image is off while game application 136 and chat application 134 are running, the predetermined processing on the image capture data of camera 118 is not performed. Therefore, since the computing resources of GPU 106 do not have to be allocated to the predetermined processing, the screen image shown in Fig. 3 rather than the screen image shown in Fig. 4 or 5 may be shown on display 120 in accordance with a user operation. In other words, GPU 106 may generate game image data 152D corresponding to game image 152 (see Fig. 3). In this case, GPU schedule 200 or GPU schedule 210 may be selected as appropriate in accordance with a user operation. When game image data 152D corresponding to game image 152 can be generated in second resource allocation period 216, GPU schedule 210 may be maintained.

In one embodiment, when electric power is supplied from an external power supply to game device 100, processing capability of GPU 106 can be enhanced. For example, game device 100 may be connectable to a cradle. The cradle may include an interface for supply of electric power from the external power supply to game device 100 and an interface for connection between game device 100 and an external display.

When game device 100 operates with electric power supplied from battery 50, power consumption may be suppressed by lowering the number of clocks or the like of GPU 106. When electric power is supplied from the external power supply, on the other hand, maximum use of processing capability of GPU 106 may be made. Consequently, even when the allocated time period is the same, GPU 106 can perform more processing. When loads in the predetermined processing on the image capture data is substantially constant, third resource allocation period 226 for performing the predetermined processing can also be made shorter. Consequently, second resource allocation period 216 can also be made longer. With at least one of enhancement of processing capability of GPU 106 or increase in length of second resource allocation period 216, game image data 152D higher in resolution can be generated even when video streaming and use of the camera image are on. The resolution of game image data 152D generated when electric power from the external power supply is supplied may thus be higher than the resolution of game image data 152D generated when electric power from the external power supply is not supplied.

In one embodiment, in first resource allocation period 222, GPU 106 performs processing for generating streaming display image data 140D corresponding to streaming display image 140. Since streaming display image 140 includes one or more image objects and camera image 148, depending on a situation, computing resources may become short. In such a case, a cycle of generation or update of streaming display image data 140D may be made longer. For example, GPU 106 generates game image data 152D in agreement with the frame rate (for example, 60 [fps]) of display 120. GPU 106, on the other hand, may generate streaming display image data 140D, for example, at a 1/2 frame rate (for example, 30 [fps]) when it is unable to generate streaming display image data 140D in agreement with the frame rate of display 120.

At this time, unless GPU 106 is able to complete generation of streaming display image data 140D, for example, in first resource allocation period 222 within a unit time period corresponding to a length of one frame, it may continue processing for generating streaming display image data 140D in first resource allocation period 222 within a subsequent unit time period. Since GPU 106 generates streaming display image data 140D and game image data 152D in different resource allocation periods, respectively, only the frame rate of streaming display image data 140D can be lowered without the frame rate of game image data 152D being affected.

In one embodiment, in game application 136, the camera image may also be used. In such a case, a part of the second resource allocation period allocated to perform processing for generating game image data 152D based on game application 136 may be used as a time period for performing image processing involved with the camera image. Consequently, the second resource allocation period becomes shorter whereas the third resource allocation period becomes longer. Computing resources necessary for generation of game image data 152D based on game application 136 are secured by the second resource allocation period and the third resource allocation period.

In a modification, in an example where game image 152 is shown over the entire display area of display 120 (see, for example, Fig. 3) or the like, image processing involved with the camera image may be performed in a part of the second resource allocation period allocated to perform processing for generating game image data 152D based on game application 136. In other words, the second resource allocation period may be used for the processing for generating game image data 152D and the image processing involved with the camera image.

### [G. Exemplary Processing by Scheduler in Game Device 100]

The GPU schedule as described above is set or changed by scheduler 180 provided by system program 132. Exemplary processing in connection with scheduler 180 will be described below.

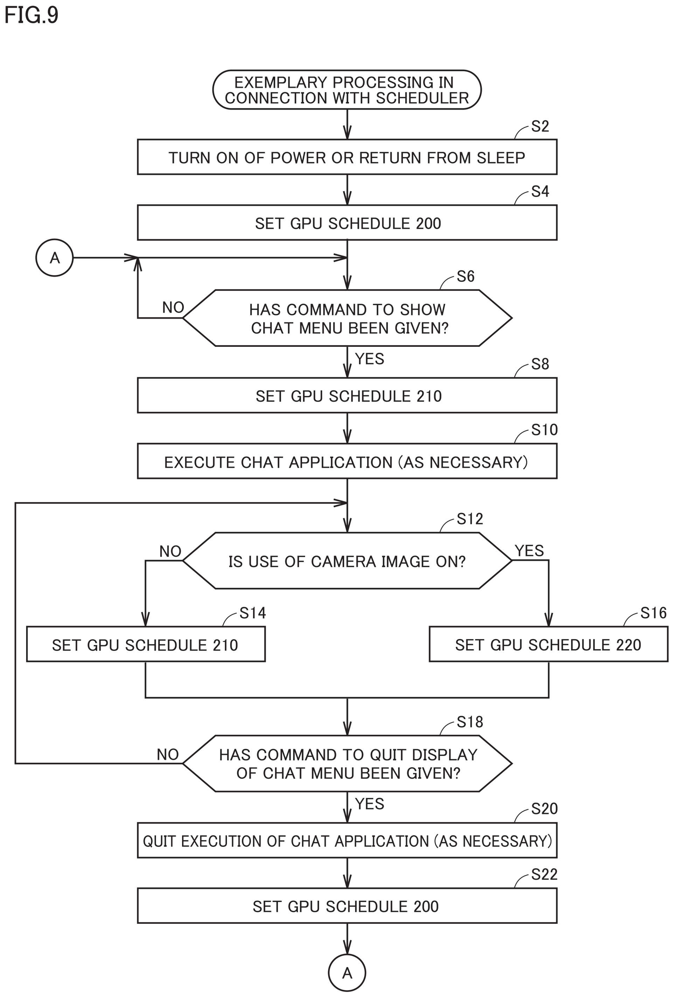

Exemplary processing in connection with scheduler 180 in game device 100 according to the present embodiment will be described with reference to Fig. 9. A processing procedure shown in Fig. 9 may be performed by execution of system program 132 by CPU 104 of game device 100.

When power is turned on or CPU 104 returns from sleep (step S2), CPU 104 sets GPU schedule 200 (see Fig. 8A) (step S4). GPU schedule 200 may be maintained regardless of whether or not game application 136 is running.

In succession, CPU 104 determines whether or not a command to show a chat menu has been given (step S6). The chat menu includes, for example, an image object for the user to use the function of chat application 134 as shown in Fig. 4 or 5. When the command to show the chat menu has not been given (NO in step S6), processing in step S6 is repeated.

When the command to show the chat menu has been given (YES in step S6), CPU 104 sets GPU schedule 210 (see Fig. 8B) (step S8) and executes chat application 134 (step S10). When chat application 134 has already been running, processing in step S10 may be skipped.

CPU 104 determines whether or not use of the camera image is on (step S12).

When use of the camera image is off (NO in step S12), GPU schedule 210 (see Fig. 8B) is set (step S14). When GPU schedule 210 has already been set, processing in step S14 may be skipped.

When use of the camera image is on (YES in step S12), on the other hand, CPU 104 sets GPU schedule 220 (see Fig. 8C) (step S16).

In succession, whether or not a command to quit the display of the chat menu has been given is determined (step S18). The command to quit the display of the chat menu includes at least one of a command to quit execution of chat application 134 or a command to switch to the display mode in which game image 152 is shown over the entire display area of display 120 while chat application 134 keeps running.

When the command to quit the display of the chat menu has not been given (NO in step S18), the processing in step S12 or later is repeated.

When the command to quit the display of the chat menu has been given (YES in step S18), CPU 104 quits execution of chat application 134 (step S20) and sets GPU schedule 200 (see Fig. 8A) (step S22). Then, the processing in step S6 or later is repeated.

When the command to switch the display mode has been given, processing in step S20 may be skipped. In other words, chat application 134 may keep running.

### [H. Modification]

In the embodiment described above, when use of the camera image is on, source game device 100 transmits camera image data 174D and mask information 176 to another game device 100. Another game device 100 can perform processing or the like for setting any image as the background by using camera image data 174D and mask information 176. In a modification, source game device 100 may set any image as the background of camera image data 174D and then may transmit the image to another game device 100. In other words, processing for setting or changing the background of the camera image may be performed by source game device 100.

Camera image data 174D and mask information 176 acquired from another game device 100 may be used not only as a part of streaming display image 140 but also as a part of the game image. For example, the face of the user who uses another game device 100, that is acquired from another game device 100, may be superimposed on the game image.

### [I. Advantages]

According to the present embodiment, since the GPU schedule can be switched in accordance with a state of execution of an application program and a communication program, computing resources of GPU 106 can efficiently be used. When the application program and the communication program are running, the resolution of the image based on the application program may be lower than when the communication program is not running. Therefore, more computing resources can be allocated to processing necessary for the communication program.

According to the present embodiment, when the use of the camera image is on, computing resources are allocated to allow use of GPU 106 as the GPGPU. Image data can thus be generated using GPU 106, and sophisticated image processing can also be performed.

While certain example systems, methods, devices and apparatuses have been described herein, it is to be understood that the appended claims are not to be limited to the systems, methods, devices and apparatuses disclosed, but on the contrary, are intended to cover various modifications and equivalent arrangements included within the spirit and scope of the appended claims.

## Claims

1. An information processing system (100) comprising:
a first processing unit (104) configured to perform first application processing and second application processing;
a second processing unit (106) configured to generate one or more pieces of image data in each unit time period; and
an output unit (114) configured to output an output image based on the one or more pieces of image data to a display (120) in each unit time period, wherein
when the first processing unit performs the first application processing and does not perform the second application processing,
the second processing unit performs processing for generating, based on the first application processing, first image data (152D) at a first resolution in a first time period (206) within the unit time period, and
the output unit outputs to the display, the output image including a first area (152) where the first image data is shown,
when the first processing unit performs the first application processing and the second application processing,
the second processing unit
performs processing for generating, based on the first application processing, second image data (152D) at a second resolution in a second time period (216) within the unit time period, the second resolution being lower than the first resolution and the second time period being shorter than the first time period, and
performs processing for generating third image data (170D) based on the second application processing in a third time period (230) within the unit time period, the third time period being different from the second time period, and
the output unit outputs the output image to the display, the output image including a second area (152M) where the second image data is shown and a third area (148) where the third image data is shown, the second area being smaller than the first area and the third area being different from the second area.

2. The information processing system according to claim 1, wherein
the second processing unit is configured to perform predetermined processing different from processing for generating image data in a fourth time period (226) within the unit time period, the fourth time period being different from the second time period and the third time period.

3. The information processing system according to claim 2, further comprising an acquisition unit (116) configured to acquire image capture data (170D) resulting from image capture of a real space with a camera (118) at least while a first condition is satisfied, wherein
the second processing unit is configured to perform the predetermined processing on the image capture data when the first processing unit performs the first application processing and the second application processing and when the first condition and a second condition are satisfied, and
when the first condition is satisfied, the fourth time period is available regardless of whether the second condition is satisfied.

4. The information processing system according to claim 3, wherein
the second processing unit is configured to generate the third image data based on the second application processing and based on at least a part of the image capture data and a result of performing the predetermined processing on the image capture data.

5. The information processing system according to claim 3, further comprising a communication unit (112) configured to communicate with another information processing system, wherein
when the first processing unit performs the first application processing and the second application processing, the communication unit is configured to acquire from the another information processing system, at least a part of image capture data (174D) resulting from image capture of the real space with the camera of the another information processing system and a result (176) of performing the predetermined processing on the image capture data, and
the second processing unit is configured to generate the third image data based on the second application processing and based on at least the part of the image capture data and the result of performing the predetermined processing that are acquired from the another information processing system.

6. The information processing system according to claim 5, wherein
the second processing unit is configured to generate image data selected in accordance with a user operation from the first image data and the second image data unless the first condition is satisfied even when the first processing unit performs the first application processing and the second application processing.

7. The information processing system according to any of claims 2 to 6, wherein
the second processing unit comprises at least a first core for performing the processing for generating image data and a second core for performing the predetermined processing, and
a time period (204; 214; 224; 228) for switching is provided between the processing for generating the image data and the predetermined processing.

8. The information processing system according to any of claims 2 to 7, wherein
when the second processing unit performs the predetermined processing in the fourth time period, the second processing unit is configured to generate image data at a third resolution lower than the second resolution, as the second image data based on the first application processing.

9. The information processing system according to any of claims 1 to 8, wherein
the information processing system is configured to be supplied with electric power from an external power supply, and
when the first processing unit performs the first application processing and the second application processing, a resolution of the second image data generated when electric power from the external power supply is supplied to the information processing system is higher than the resolution of the second image data generated when electric power from the external power supply is not supplied to the information processing system.

10. The information processing system according to any of claims 1 to 9, wherein
when the first processing unit performs the first application processing and the second application processing, the second processing unit is configured to continue processing for generating the third image data in the third time period within a subsequent unit time period unless the second processing unit is able to complete generation of the third image data in the third time period within the unit time period.

11. The information processing system according to any of claims 1 to 10, wherein
when image data based on the first application processing includes at least a part of image capture data resulting from image capture of a real space with a camera, a part of a time period in which processing for generating image data based on the first application processing is performed is used as a time period for performing predetermined processing on the image capture data.

12. An information processing method in an information processing system (100) comprising a first processing unit (104) configured to perform first application processing and second application processing and a second processing unit (106) configured to generate one or more pieces of image data in each unit time period, the information processing method comprising:
when the first processing unit performs the first application processing and does not perform the second application processing,
performing, at the second processing unit, processing for generating, based on the first application processing, first image data (152D) at a first resolution in a first time period (206) within the unit time period, and
outputting to a display, an output image including a first area (152) where the first image data is shown in each unit time period; and
when the first processing unit performs the first application processing and the second application processing,
performing, at the second processing unit, processing for generating, based on the first application processing, second image data (152D) at a second resolution in a second time period (216) within the unit time period, the second resolution being lower than the first resolution and the second time period being shorter than the first time period,
performing, at the second processing unit, processing for generating third image data (170D) based on the second application processing in a third time period (230) within the unit time period, the third time period being different from the second time period, and
outputting the output image to the display in each unit time period, the output image including a second area (152M) where the second image data is shown and a third area (148) where the third image data is shown, the second area being smaller than the first area and the third area being different from the second area.
